# EUROPEAN PATENT SPECIFICATION

(11) **EP 3 712 537 B1**
(45) Date of publication and mention of the grant of the patent: **23.10.2024**
(21) Application number: 20163887.1
(22) Date of filing: 18.03.2020
(51) Int. Cl.: F24F 13/20, F24F 8/80, F24F 3/16

(54) **AIR PURIFYING APPARATUS**
LUFTREINIGUNGSVORRICHTUNG
APPAREIL DE PURIFICATION D'AIR

(30) Priority: 19.03.2019 KR 20190031443
(43) Date of publication of application: 23.09.2020
(73) Proprietor: LG Electronics Inc., 07336 SEOUL (KR); Chungang University Industry Academic Cooperation Foundation, Seoul 06974 (KR)
(72) Inventor: KANG, Jiyoung, 08592 Seoul (KR); CHUNG, Haeyoong, 08592 Seoul (KR); JEON, Jongkeon, 08592 Seoul (KR); LEE, David Kangseong, 08592 Seoul (KR); KWAK, Daeyoung, 06904 Seoul (KR); PARK, Sohee, 06985 Seoul (KR)
(74) Representative: Vossius & Partner Patentanwälte Rechtsanwälte mbB

(56) References cited:
- EP-A2- 1 437 169
- CN-A- 106 940 078
- JP-A- H09 178 259
- JP-U- S53 159 152

## Description

The present invention relates to an air purifying apparatus.

The air purifying apparatus is an apparatus which suctions contaminated air to purify the contaminated air, and then discharges purified air. For example, the air purifying apparatus may include a blowing device which flows outside air into the interior of the air purifying apparatus and discharges the outdoor air to the outside, and a filter capable of filtering dust, bacteria, and the like. Generally, an air purifying apparatus is configured to purify an indoor space such as a home or office.

EP 1 437 169 A2 relates to an air cleaning apparatus including an air cleaning unit which is vertically movable within an upright cylindrical cabinet. The air cleaning unit is provided with a blowing unit and a filtering unit to clean air. The air cleaning apparatus also includes upper and lower sensors, and a control unit. The upper and lower sensors are provided on upper and lower portions of the cabinet, respectively, to sense air pollution levels of upper and lower parts of a room. The control unit controls the air cleaning unit so that the air cleaning unit moves upward or downward, according to data obtained from the upper and lower sensors.

JP H09 178259 A relates to an air conditioner comprising a main body and a vertically movable discharge means. A suction port is formed in a lower portion of the front surface of a main body. A discharge port for discharging heat-exchanged air and a wind direction blade for adjusting the direction of the air discharged into the room through the discharge port are formed in the vertically movable discharge means.

Since the air purifying apparatus operates in a state where air purifying apparatus is placed in a fixed place in the room, the area of the clean air is limited according to the nature of the clean air discharged from the discharge port and the discharge port of the air purifying apparatus.

As a way to solve such a problem, Korean Registration No. 10-0933634, an air purifying apparatus, has been proposed.

In the related art described above, the air purifying unit lifts and lowers inside the main body and purifies the air. When the air purifying unit is placed on the upper portion, the air purifying unit purifies the upper air, and when the air purifying unit is placed on the lower side, the air purifying unit purifies the lower air.

According to the related art described above, the operation of the air purifying unit is limited since the air purifying unit is placed in either the upper portion or the lower portion. According to this, there is a problem that the usability of the air purifying unit is limited and the air blowing area of the clean air is selectively operated only.

According to the related art described above, the suction and discharge of the airflow are made by lateral suction and lateral discharge of the main body. According to this, clean air can be supplied only to an area below the height of the air purifying apparatus, and clean air cannot be supplied to an area equal to or higher than the height of the air purifying apparatus.

The present invention is proposed under the background described above and has the object to provide an air purifying apparatus which can sufficiently utilize a given specification of the air purifying apparatus to quickly purify the indoor air. This object is achieved with the features of the claims.

The present invention proposes an air purifying apparatus capable of using both the upper portion and the lower portion of the air purifying apparatus as a discharging structure at the same time.

The present invention proposes an air purifying apparatus which can supply clean air simultaneously to the entire area of the space where the air purifying apparatus is placed so that the air purifying apparatus can cope with the needs of various users.

The present invention proposes an air purifying apparatus capable of increasing the satisfaction of a user by considering a user who does not want to be in direct contact the airflow with the human body.

According to the present invention, there is provided an air purifying apparatus includes: a filter, a fan configured to suction outside air by applying negative pressure to the filter, a first case having a wall for receiving at least a portion of the fan and the filter, the first case extending in a vertical direction; a second case which can move in the vertical direction so as to receive at least a portion of the fan and the filter and at least partly overlap with the wall of the first case; an upper discharge portion provided on an upper portion of the second case so as to discharge air purified by the filter; and a suction portion provided in the first case.
According to the present invention, the air purifying apparatus can be operated by moving the second case and selecting a mode desired by the user.

In an embodiment, the suction portion includes a lower suction portion through which the outside air is suctioned through the wall of the first case; and a base suction portion which is provided at an interval between a base which is spaced apart from a lower side of the first case and the first case and through which the outside air is suctioned, so that a large amount of air can be suctioned.

In an embodiment, the discharge portion includes an intermediate discharge portion provided at a lower portion of the second case so that a large amount of clean air can be supplied in a case where the user desires.

In an embodiment, the intermediate discharge portion may overlap with at least a portion of the suction portion, so that the amount of the outside air to be suctioned can be adjusted.

According to the present invention, the discharge portion includes the upper discharge portion provided on the upper portion of the second case so that the discharge height of the clean air can be adjusted in accordance with the user's needs.

According to the present invention, the upper discharge portion includes an upper-side upward discharge portion provided on the upper-end front surface of the second case and configured for discharging clean air upward, so that clean air can be discharged upward in a case where the user desires.

According to the present invention, at least one of an upper-portion lateral discharge portion is provided on an upper side surface of the second case and configured for discharging the clean air laterally, so that clean air can be discharged laterally from the upper portion of the air purifying apparatus in a case where the user desires.

According to the present invention, the upper-side upward discharge portion and the upper-portion lateral discharge portion are configured to be opened and closed separately from each other so that the user can intensively discharge the clean air in the desired direction.

In an embodiment, the air purifying apparatus further includes an LM guide connecting the first case and the second case to each other, so that the overlapping action of the case can be stably performed.

In an embodiment, the upper portion of the second case includes a no-hole region without a hole so that the components can be received in the non-hole region, and interference can be prevented when the second case is lifted and lowered.

In an embodiment, the first case and the second case are provided in a cylindrical shape so as not to interfere with the flow of air.

In an embodiment, the first case and the second case share a geometric center, and the case is elongated and contracted so that the height of the air purifying apparatus can be freely adjusted.

According to the present invention, the height at which the clean air is discharged can be adjusted by the user.

Since the air purifying apparatus of the present invention further includes an upper-side upward discharge portion for discharging clean air upward from an upper-portion upper surface of the second case, the air purifying apparatus can indirectly supply the clean air in a case where the indirect wind is desired by the user.

Since the air purifying apparatus of the present invention further includes at least one of the upper-portion lateral discharge portions for discharging the clean air laterally from the upper-portion side surface of the second case, the clean air can be directly supplied in a case where the user desires direct wind.

In an embodiment, the air purifying apparatus further includes an opening and closing structure which opens and closes at least one of the upper-side upward discharge portion and the upper-portion lateral discharge portion, so that the clean air can be intensively supplied to any one of the upper-side discharge portions.

In an embodiment, the upper-side upward discharge portion opening and closing structure for opening and closing the upper-side upward discharge portion includes: a cover horizontally disposed on an inner surface of the second case, at least two variable blades received in an inner space of the cover; and a drive plate for rotating the at least two variable blades, wherein rotation of the at least two variable blades about a fixed shaft which contacts the cover is guided by the rotation shaft which contacts the drive plate so that the size of the discharge port can be adjusted and the opening degree of the discharge port can be adjusted to the desired degree by the user, and the wind velocity and wind volume of clean air can be adjusted.

In an embodiment, the opening and closing structure for opening and closing the upper-portion lateral discharge portion includes a door having a rack on the inner side; a motor support portion fixed to the second case; and a motor which is fixed to the motor support portion and meshes with the rack to drive a pinion capable of lifting and lowering the door, so that the wind volume and wind velocity of the clean air can be adjusted.

In an embodiment, the opening and closing structure is placed in the non-hole region where air does not pass on the upper portion of the second case so that the flow of air can be controlled without interfering with the air cleaning action.

According to the present invention, the size of the air purifying apparatus can be adjusted so that the user can use the air purifying apparatus in various modes.

According to the present invention, it is possible to improve the structure of the air purifying apparatus and to use the entire case of the air purifying apparatus as a suction structure and a discharge structure, thereby improving the fluidity of the airflow and quickly purifying the indoor space.

According to the present invention, since the mode change of the air purifying apparatus leads to the improvement of the suction performance and the increase of the discharge area, the entire area of the air purifying apparatus, regardless of the upper portion and the lower portion thereof, can contribute to the performance of the air purifying apparatus.

According to the present invention, since the air purifying apparatus can be operated in various modes with respect to a region desired by the user with various discharge structures, the customer's needs can be satisfied.

According to the present invention, by providing a blocking membrane structure, direct airflow and indirect airflow can be selected for each individual, and thus it is possible to improve satisfaction even for individual users such as the old and the infirm who are different from other users in the same space.

### BRIEF DESCRIPTION OF THE DRAWINGS

Figs. 1 and 2 are front views illustrating an air purifying apparatus according to an embodiment, Fig. 1 is a state where the length of the air purifying apparatus is reduced in the vertical direction, and Fig. 2 is a view illustrating a state where the length of the air purifying apparatus in the vertical direction is elongated.
Fig. 3 is a sectional view illustrating an air purifying region of an air purifying apparatus according to an embodiment.
Fig. 4 is a front view illustrating an air purifying apparatus having a case partially cut.
Fig. 5 is a view illustrating a lifting and lowering device of the second case.
Fig. 6 is a view illustrating an operation state of a normal mode.
Fig. 7 is a view illustrating an operation state of a power mode.
Fig. 8 is a view for explaining the action of the discharge portion of the air purifying apparatus according to the embodiment.
Fig. 9 is a sectional view for explaining an opening and closing structure for opening and closing the upper-side upward discharge portion.
Fig. 10 is an exploded perspective view illustrating the upper-side upward discharge portion opening and closing structure.
Fig. 11 is a perspective view for explaining the opening and closing structure of the upper-portion lateral discharge portion.
Figs. 12 to 14 are views for explaining a discharge mode of the air purifying apparatus implemented by the air purifying apparatus of the embodiment, Fig. 12 illustrates a state where only the upper-portion lateral discharge portion is opened, Fig. 13 illustrates a state where only the upper-side upward discharge portion, and Fig. 14 is a view illustrating a state where both the upper-portion lateral discharge portion and the upper-side upward discharge portion are opened.

### DETAILED DESCRIPTION OF THE EMBODIMENTS

In the following description, for ease of understanding, the drawings may be exaggerated, but this can be understood by focusing on the interrelationship among components.

In the following description, the first, second, and so on are not intended to set priorities but to distinguish components which should be described separately even though performing similar functions.

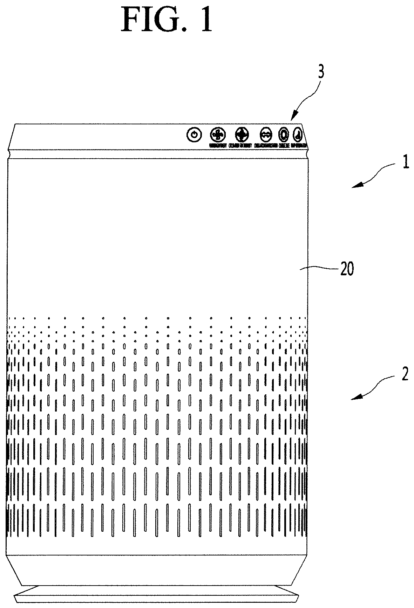

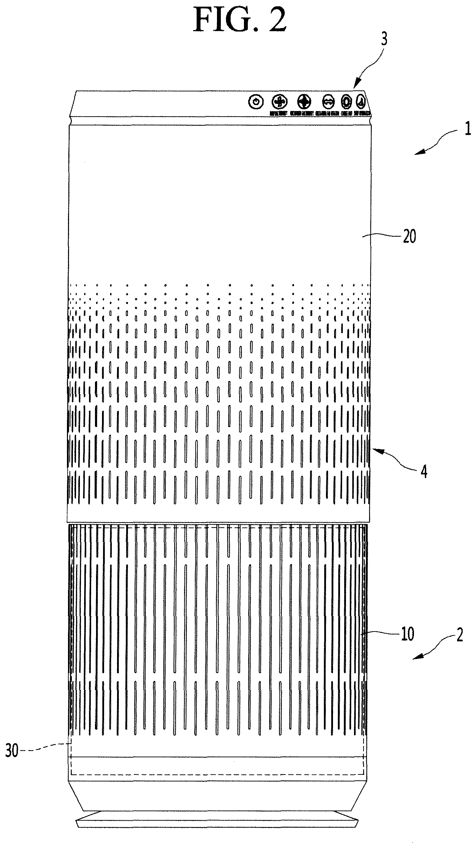

Figs. 1 and 2 are front views illustrating an air purifying apparatus according to an embodiment, Fig. 1 is a state where the length of the air purifying apparatus is reduced in the vertical direction, and Fig. 2 is a view illustrating a state where the length of the air purifying apparatus in the vertical direction is elongated.

Referring to Figs. 1 and 2, the air purifying apparatus 1 according to the embodiment includes a first case 10 and a second case 20 of a cylindrical wall which are provided to be long in a vertical direction, a suction portion 2 provided on a lower portion of the air purifying apparatus 1, an upper discharge portion 3 provided at the upper portion of the air purifying apparatus 1, and an intermediate discharge portion 4 provided at an intermediate portion of the air purifying apparatus 1.

The first case 10 and the second case 20 are provided as a structure capable of overlapping inward and outward each other. The second case 20 may be provided in a cylindrical shape slightly larger in diameter than the first case 10.

In a state where the second case 20 is moved downward, the walls of the second case 20 and the walls of the first case 10 overlap each other and have the same geometric center as each other (a state of Fig. 1). At this time, the second case 20 may be placed outside. The length of the air purifying apparatus 1 in the vertical direction is in a state of being shortened. The air passing through the suction portion 2 can flow into the equipment through both the first case 10 and the second case 20.

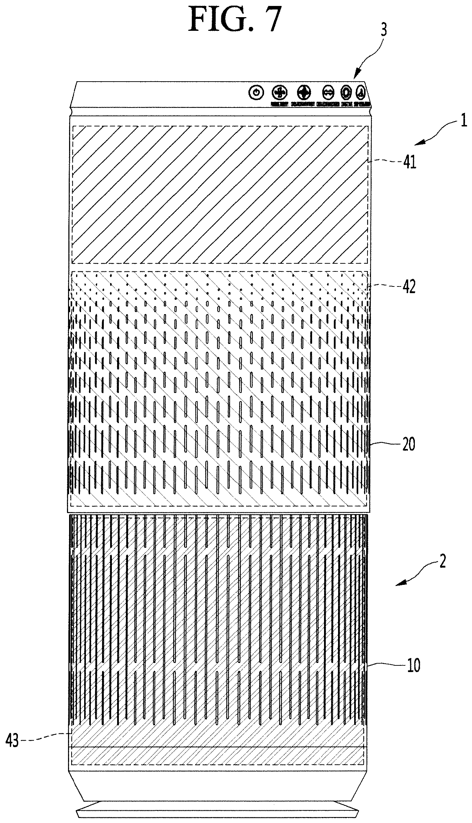

More precisely, the air passing through the suction portion 2 passes through both a second hole region (42 in Fig. 7) of the second case 20 and a first hole region (43 in Fig. 7) of a first case 10 and flows into the air purifying apparatus.

In a state where the second case 20 is moved upward, there is no area where the second case 20 and the first case 10 are overlapped each other or at least a portion thereof can be provided to be overlapped each other (a state illustrated in Fig. 2). The second case 20 and the first case 10 may have the same center by extending imaginary extension lines in the extending direction of the second case 20 and the first case 10. At this time, the length of the air purifying apparatus 1 in the vertical direction is in a state of being long. The air passing through the suction portion 2 can flow into the equipment through the first case 10.

More precisely, the air passing through the suction portion 2 can flow into the interior of the equipment through the first hole region (43 in Fig. 7) of the first case 10.

In a state where the second case 20 is moved upward, air passing through the suction portion 2 can flow into the equipment through the first case 10 only. On the other hand, in a state where the second case 20 is moved downward, the air has to only pass through both the first case 10 and the second case 20 to flow into the equipment.

According to this, in a case where the second case 20 is moved upward, the resistance of the flow path is small, and when the performance of other components is the same, a larger amount of outside air can be suctioned and a larger amount of air can be purified at the same time.

A state where the second case 20 is moved upward may be referred to as a power mode and a state where the second case 20 is moved downward may be referred to as a normal mode. In other words, in the power mode, more clean air can be blown into a wider indoor space than in the normal mode.

In the normal mode, the second hole region (see 42 in Fig. 7) of the second case 20 rests on the suction portion 2 to obstruct the suction of the outside air. In the power mode, the intermediate discharge portion 4 is provided to make the discharge of clean air smoother. The switching operation between the normal mode and the power mode can be performed by the action of the second hole region 42.

The second hole region 42 and the first hole region (see 43 in Fig. 7) may have different opening ratios. For example, the opening ratio of the second hole region (see 42 in Fig. 7) may be smaller than the opening ratio of the first hole region (see 43 of Fig. 7). According to this configuration, it is possible to increase the suction efficiency of the suction portion 2 so that the discharge efficiency of the intermediate discharge portion 4 is not lowered in the power mode and to lower the suction efficiency of the suction portion 2 in the normal mode. The opening ratio may vary according to the performance and requirements of the air purifying apparatus.

The opening ratio may mean an area in which a through-hole through which air can pass is machined to the entire area of the case. The opening portion for adjusting the opening ratio may be provided by a hole, the size and number of the holes may be different, and the slit may be provided instead of the hole, and the length and width of the slit may be different. Various other measures can be expected.

In Fig. 2, reference numeral 30 denotes an air purifying region, and a fan for pulling airflow and a filter for filtering foreign matter may be installed inside the air purifying region. The internal structure of the air purifying region will be described with reference to the other drawing.

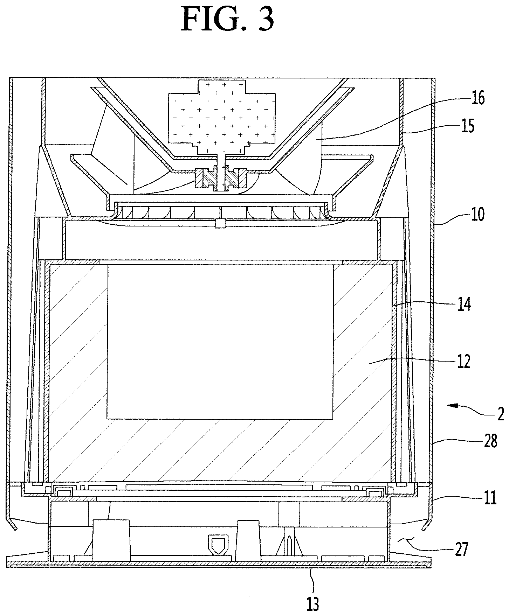

Fig. 3 is a sectional view of the air purifying region of the air purifying apparatus according to the embodiment. Referring to Fig. 3, the vertical direction is referred to as an axial direction, and the horizontal direction is referred to as a radial direction.

Referring to Fig. 3, the air purifying apparatus 1 according to the embodiment can generate an airflow. In this case, the airflow may form a flow for suctioning indoor air present in the lower portion of the air purifying apparatus 1.

The axial direction may correspond to the central axis direction of the fan 16, that is, the motor axial direction of the fan. The radial direction can be understood as a direction perpendicular to the axial direction. The imaginary circular direction formed when the rotation is performed about the axial direction and using the distance in the radial direction as the rotation radius may be referred to as the circumferential direction.

The air purifying apparatus 1 may include a base 13 provided at the lower side of the first case 10 and placed on the floor. The base 13 may be spaced downwardly from the lower end portion of the first case 10. The first casing 10 and the base 13 may be spaced apart from each other to provide a base suction portion 27 for suctioning outside air.

The base suction portion 27 and the lower suction portions 28 provided as a plurality of holes at the lower portion of the case 10 and 20 may be collectively referred to as a suction portion 2.

The outside air having passed through the suction portion 2 passes through the outer circumferential surface of the cylindrical filter member 12 and can flow into the filter member 12. The filter member 12 may have a filter surface provided in a cylindrical shape to filter air.

Since the filter member 12 has a cylindrical shape, air can flow in any direction with respect to the axis of the filter member 12. Accordingly, the filtering area of the air can be increased. The filter member 12 may be provided with a filter surface also on the bottom surface of the cylinder. Since the filter member 12 is provided in a cylindrical shape having a bottom portion, the outside air can be suctioned even by the bottom surface, and as a result, a larger amount of outside air can be suctioned and filtered.

The air purifying apparatus 1 may further include a filter frame 14 forming a mounting space for the filter member 12. The filter frame 14 may serve to support an entire load of each component which performs the function of the air purifying apparatus 1 inside the first case 10.

The mounting space may be formed in a cylindrical shape corresponding to the shape of the filter member 12. The filter member 12 can be slidably pulled in toward the mounting space in the mounting process. On the contrary, the filter member 12 can be slidably pulled out from the mounting space in the separating process.

An air blowing device is provided to provide airflow inside the first case 10. The air blowing device includes a fan housing 15 installed at an outlet side of the filter member 12. A fan 16 is housed in the fan housing 15. The fan housing 15 can be supported by the filter frame 14.

The air blowing device may include a fan 16 which provides a flow pressure of air through the rotation. The fan 16 may be provided with a centrifugal fan for introducing air in the axial direction and discharging air upward in the radial direction.

The clean air discharged from the fan 16 can be discharged through a discharge port. The clean air may be discharged through the upper discharge portion 3 and the intermediate discharge portion 4 in the power mode and may be discharged through the upper discharge portion 3 in the normal mode.

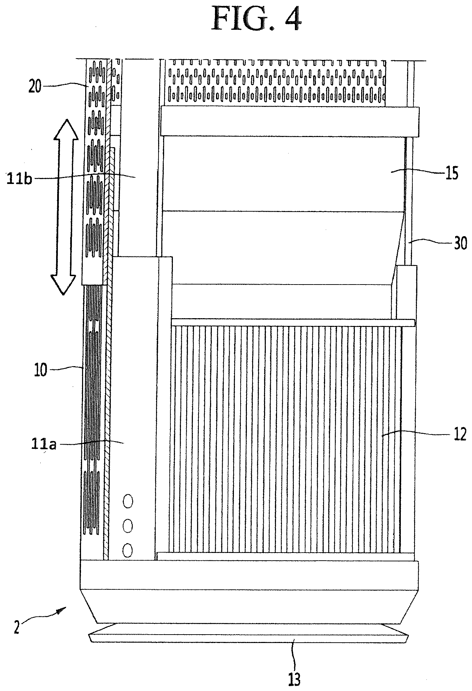

Fig. 4 is a front view illustrating the air purifying apparatus having the case partially cut out and is a view illustrating movement action of the first case and the second case.

Referring to Fig. 4, in a state where the first case 10 is stopped, the second case 20 can move in the vertical direction at the outside of the first case 10. A Linear Motion Guide (LM guide) may be provided to guide the mutual sliding operation of the cases 10 and 20. At least two LM guides may be provided with a predetermined interval.

The LM guide may include a first LM guide 11a fixed to a side of the first case 10 and a second LM guide 11b fixed to a side of the second case 20. The LM guide can accurately guide upward and downward movement when the case is elongated or contracted by the sliding action of the two members.

The first LM guide 11a may be fixed with each of the apparatus inside the air purifying region 30, for example, members such as the fan housing 15 and the filter frame 14. The air purifying region may be fixed directly or indirectly to the first case 10 and may not move.

The LM guide may be integrally formed with members such as the filter frame 14 and the fan housing 15 to provide a frame 30 which supports the air purifying apparatus 1 and maintains the shape thereof.

The driving of the upper and lower operations of the cases 10 and 20 will be described.

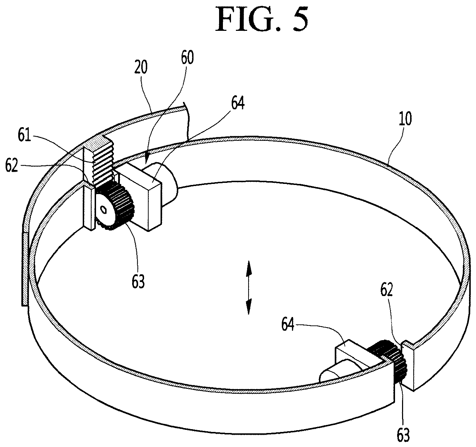

Fig. 5 is a view illustrating a lifting and lowering device of the second case.

Referring to Fig. 5, the lifting and lowering device of the second case may include two pinions 63 which are rotatably installed on both side guide groove portions of the first case 10 to engage with the racks 61 formed on both sides of the inner surface of the second case 20, and two drive motors 64 installed in the first case 10 to drive the two pinions 63 in the forward and reverse directions, respectively.

The pinion 63 and the rack 61 are interlocked with each other by the forward or reverse rotations of the two drive motors 64 so that the second case can lift and lower.

At this time, the two drive motors 64 can be decelerated and rotated through the built-in reduction gear. According to the reduction gear, it is possible to improve the problem that the rotational speed is high while the rotational torque is low in a case of a general motor.

The racks 61 may be provided at three or more positions instead of the opposite sides of the second case. The larger the diameter of the case or the smaller the size and power of the driving motor 64, the rack will be possible to support the weight of the case 10 and 20 in more places.

The lifting and lowering device of the second case may be provided at an upper portion of the first case in which the first case and the second case can overlap each other inside and outside.

The lifting and lowering device of the second case may have various other configurations besides the above configuration. For example, in a case where the load of the second case 20 and associated members thereof is large, a plunger-type driving mechanism using hydraulic pressure and air pressure may be applied.

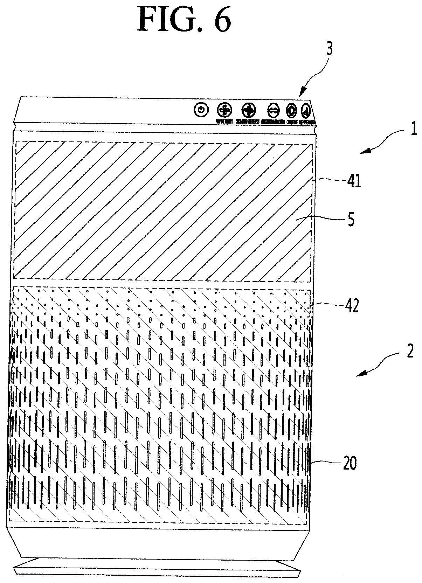

Fig. 6 is a view illustrating an operation state of the normal mode and Fig. 7 is a view illustrating an operation state of the power mode. The individual configurations and interactions of the case will be described in more detail with reference to Figs. 6 and 7.

Referring to Figs. 6 and 7 together, a first hole region 43 may be provided in the first case 10. The first hole region 43 may be formed as a plurality of long holes vertically provided on the wall surface of the first case 10.

The wall surface of the second case 20 may be divided into a second hole region 42 at the lower portion and a non-hole region 41 at the upper portion. The second hole region 42 may be provided with a long hole in the vertical direction or a short hole in the vertical direction. The opening ratio of the second hole region 42 can be adjusted by adjusting the number ratio of the short hole and the long hole. Of course, the size and so on can be adjusted.

In the non-hole region 41, various opening and closing structures for opening and closing the discharge port can be received. The detailed configuration of the opening and closing structure will be described later, and according to this, the internal configuration of the air purifying apparatus is configured to be compact, and each portion of the air purifying apparatus can be effectively utilized.

Meanwhile, the non-hole region 41, the first hole region 43, and the second hole region 42 are indicated by dotted lines in the drawing as an indication of the predetermined area.

In the normal mode, the second case 20 is moved to the lower side and placed. At this time, the first hole region 43 and the second hole region 42 overlap each other to provide the lower suction portion 28. Therefore, in the normal mode, the flow path resistance of the suction of the outside air through the lower suction portion 28 can be increased. The intermediate discharge portion 4 is not operated as the discharge portion and clean air can be discharged only through the upper discharge portion 3. This is because the second hole region 42 operating as the intermediate discharge portion 4 overlaps the first hole region 43 and functions as a suction portion.

In the power mode, the second case 20 moves to the upper side and placed. At this time, the first hole region 43 and the second hole region 42 are separated without overlapping each other. The lower suction portion 28 may be provided only by the first hole region 43 and the intermediate discharge portion 4 may be provided by only the second hole region 42.

In the power mode, the lower suction portion 28 is provided only in the first hole region 43. The outside airflows through the first hole region 43 only. Therefore, the flow path resistance of the outside air suction can be reduced compared to the normal mode. Since the intermediate discharge portion 4 together with the upper discharge portion 3 can be used as the discharge portion of the clean air, the flow path resistance can be reduced compared to the normal mode in the action of discharging the clean air.

By such an action, the power mode can suction more outside air, perform a purifying action, and blow clean air into the room as compared with the normal mode.

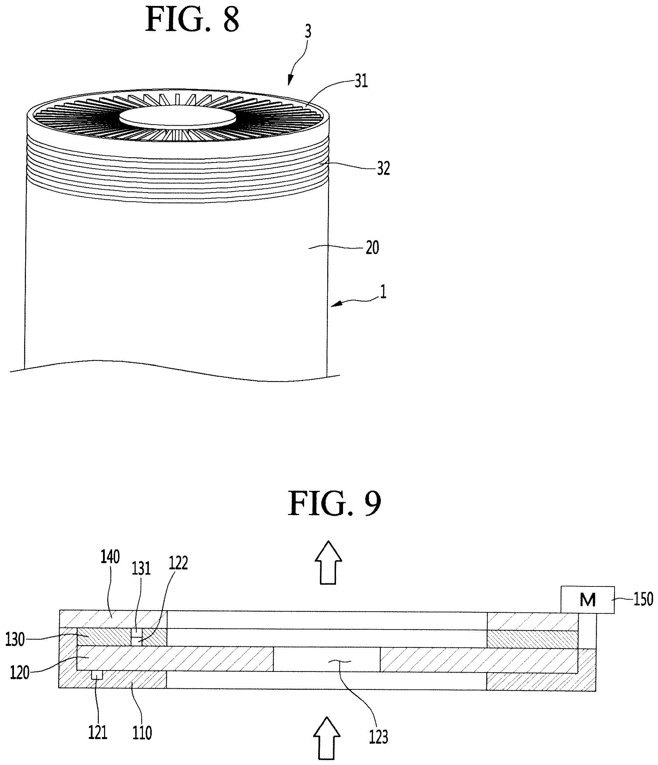

Fig. 8 is a view for explaining the action of the discharge portion of the air purifying apparatus according to the embodiment.

Referring to Fig. 8, the upper discharge portion 3 is provided with an upper-side upward discharge portion 31 provided on the upper surface of the air purifying apparatus and discharging clean air upward and the upper-portion lateral discharge portion 32 provided on the upper-portion side surface of the air purifying apparatus and discharging clean air laterally. The upper-portion lateral discharge portion 32 is provided at the upper-end of the non-hole region and can increase the lateral flow velocity of the clean air discharged from the upper discharge portion 3.

The upper-side upward discharge portion 31 and the upper-portion lateral discharge portion 32 may be provided in a grill structure having a plurality of ribs capable of guiding the flow direction of the clean air.

The upper-side upward discharge portion 31 and the upper-portion lateral discharge portion 32 can be opened and closed separately from each other. Accordingly, the clean air provided from the fan 16 can be discharged by at least one of the upper-side upward discharge portion 31 and the upper-portion lateral discharge portion 32 being selected.

Various operating modes of the air purifying apparatus can be implemented by various adjustments of the discharge wind described above, and the satisfaction of the user can further be improved through various operating modes to be implemented.

Hereinafter, the opening and closing structure for opening and closing the upper-side upward discharge portion and the upper-portion lateral discharge portion will be described.

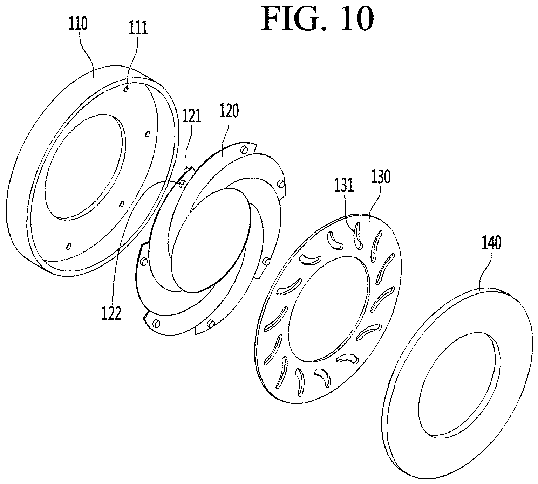

Fig. 9 is a sectional view for explaining an opening and closing structure for opening and closing the upper-side upward discharge portion, and Fig. 10 is an exploded perspective view illustrating the upper-side upward discharge portion opening and closing structure.

Referring to Figs. 9 and 10, the upper-side upward discharge portion opening and closing structure is horizontally disposed on the upper surface discharge side of the air purifying apparatus 1, and an opened hole 123 can be provided in the intermediate portion of the discharge portion and can adjust the opening degree of the opened hole. The clean air discharged from the fan 16 can be blown upward with reference to the drawing.

The upper-side upward discharge portion opening and closing structure includes a lower cover 110 provided on the lower side and an upper side cover 140 provided on the upper side. The covers 110 and 140 provide a receiving space therein, and at least two variable blades 120 and a drive plate 130 may be provided in the receiving space. The drive shaft of the core 150 may be engaged with either one of the outer circumferential surfaces of the drive plate 130 so that the drive plate 130 is rotated by the motor 150.

The variable blades 120 may be provided as a substantial blade shape and have a circumferentially extending shape. The variable blades 120 may cooperate with the drive plate 130 via rotation shafts 122 and may cooperate with the lower cover 110 via fixing shafts 121. According to an embodiment, each of the variable blades 120 may comprise at one side a rotation shaft 122 and at the opposite side a fixing shaft 121. The variable blades 120 can be rotated by rotating the rotation shaft 122 via the contact plate 130 in a state where the variable blades 120 are rotatably fixed via the fixed shaft 121 into openings 111 of the lower cover 110. Since the two or more variable blades 120 are provided and the two or more variable blades 120 are operated by the same drive plate 130, the two or more variable blades can be rotated by the same angle and moved by the same distance.

The rotation shaft 122 can move along the guide slot 131 of the drive plate 130 and the direction of movement can be limited by the guide slot 131. The guide slot 131 is smoothly bent toward the central direction of the drive plate 130. When the drive plate 130 rotates, the rotation shaft 122 can be moved by being limited by the guide slot 131. The movement of the rotation shaft 122 may lead to the rotation of the variable blade 120.

The action of the upper-side upward discharge portion opening and closing structure will be sequentially described.

The drive plate 130 can be rotated by the power provided by the motor 150. When the drive plate 130 rotates, the guide slot 131 can rotate in the same manner. The rotation shaft 122 guided along the guide slot 131 can move inward toward the central portion of the opened hole 123 or the outside. At this time, the rotation shaft 122 can slide on the inner surface of the guide slot 131.

The movement of the rotation shaft 122 in and out is followed by an operation of rotating the variable blade 120 in and out about the fixed shaft 121. The rotation of at least two of the variable blades 120 leads to mutual overlapping of the variable blades 120 so that the size of the opened hole 123 can be increased or decreased.

The discharge area of the upper-side upward discharge portion 31 can determine the amount of discharge wind of the upper-side upward discharge portion 31. The discharge area of the upper-side upward discharge portion 31 can be adjusted by the size of the opened hole 123. The opened hole 123 passes through the central portion of the lower cover 110, the variable blade 120, the drive plate 130, and the upper cover 140. The size of the opened hole 123 may be reduced or enlarged by overlapping two or more of the variable blades 120. If the diameter of the opened hole 123 is large, a larger amount of clean air can be discharged and if the diameter of the opened hole 123 is small, a smaller amount of clean air can be discharged.

As a result, the size of the opened hole 123 is enlarged or reduced by the forward rotation or the reverse rotation of the motor 150, and the amount of the clean air discharged through the upper-side upward discharge portion 31 can be reduced or increased. In some cases, the upper-side upward discharge portion 31 may be completely closed or completely opened, and the opening degree of the upper-side upward discharge portion may be adjusted by adjusting the size of the opened hole 123.

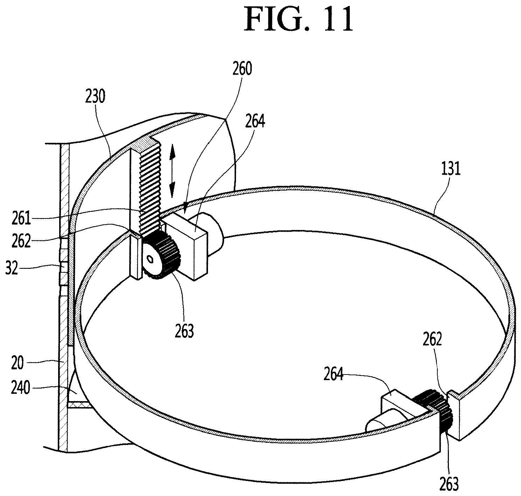

Fig. 11 is a perspective view for explaining the opening and closing structure of the upper-side upward discharge portion.

Referring to Fig. 11, the upper-portion lateral discharge portion is closed by lifting the door 230 placed on the lower side of the upper-portion lateral discharge portion 32 and can be opened by lowering the door 230. Of course, when the installation position of the door 230 is changed, the operation of the door and the state of the opening and closing structure can be changed.

The upper-portion lateral discharge portion opening and closing structure may be positioned inside the non-hole region 41. The upper-portion lateral discharge portion opening and closing structure may be positioned on the upper side closest to the upper-side upward discharge portion opening and closing structure.

The opening and closing structure of the upper-side upward discharge portion includes a motor support portion 131 fastened to the second case 20 by a pedestal 240. The motor support portion 131 may be provided as a circular plate in the same manner as the second case 20.

The opening and closing structure of the upper-portion lateral discharge portion may include a rack 261 formed on both sides of the inner surface of the door 230, two pinions 263 rotatably installed on both guide groove portions of the motor support portion 131 so as to engage with the rack 261, respectively, and two drive motors 264 installed on the motor support portion 131 to drive the two pinions 263 in the forward and reverse directions, respectively.

According to the configuration described above, the pinion 263 and the rack 261 can be interlocked with each other and the door 230 can be lifted and lowered by the forward or reverse rotation of the two driving motors 264. When the door 230 is lifted, the upper-portion lateral discharge portion 32 is closed and when the door 230 is lowered, the upper-portion lateral discharge portion 32 can be opened.

The two drive motors 264 may be capable of decelerating rotation through a built-in reduction gear. A general drive motor can perform the action of improving the low torque while the rotation speed is high. The rack 261 may be provided at three or more positions instead of the opposite sides of the door.

The opening and closing structure of the upper-portion lateral discharge portion may have various other configurations besides the above configuration. For example, in a case where the load on the door 230 and the member attached thereto is large, a plunger-type drive mechanism using hydraulic pressure and pneumatic pressure may be applied. In a case where it is necessary to open and close the door 230 quickly, a mechanism such as a solenoid may be used.

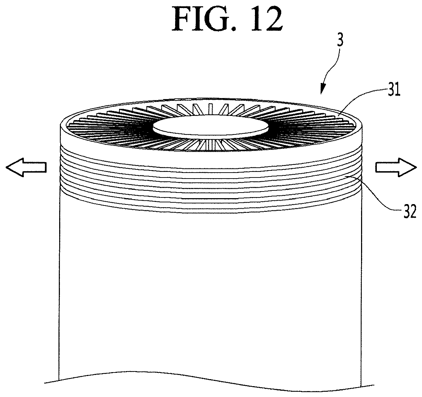

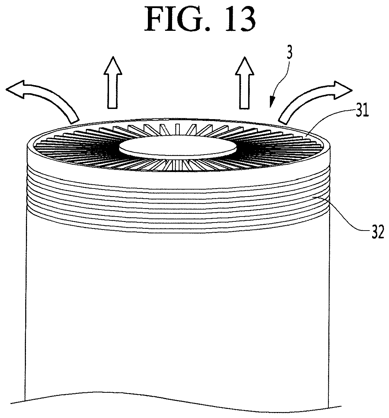

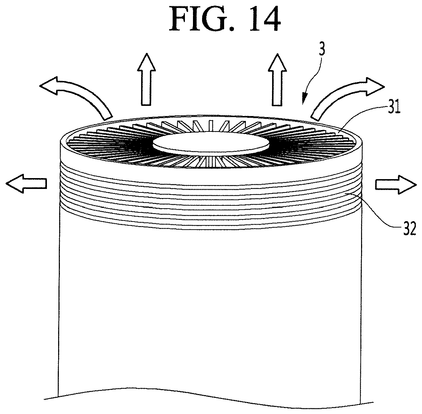

Figs. 12 to 14 are views for explaining a discharge mode of the air purifying apparatus implemented by the air purifying apparatus of the embodiment, Fig. 12 illustrates a state where only the upper-portion lateral discharge portion is opened, Fig. 13 illustrates a state where only the upper-side upward discharge portion, and Fig. 14 is a view illustrating a state where both the upper-portion lateral discharge portion and the upper-side upward discharge portion are opened.

Referring to Fig. 12, the upper-portion lateral discharge portion 32 discharges clean air laterally from the upper portion of the air purifying apparatus. This clean air is discharged at a high flow rate through a relatively small discharge area, and can directly affect adjacent users. The air discharged through the upper-portion lateral discharge portion 32 may be referred to as direct wind which directly affects the user.

Referring to Fig. 13, the upper-side upward discharge portion 31 discharges clean air upward through the upper-side upper surface of the air purifying apparatus. This clean air is moved downwards at another position spaced apart after colliding at the ceiling where the clean air is blown toward a side of the ceiling of the indoor space. The air discharged through the upper-side upward discharge portion 31 can be regarded as an indirect wind which indirectly affects the user without directly affecting the user.

The direct wind and the indirect wind can be based on the sensibility of the user whether the user can feel or cannot feel by the degree of wind speed.

Referring to Fig. 14, both the upper-side upward discharge portion 31 and the upper-portion lateral discharge portion 32 are in a state of being opened, and both the indirect wind and the direct wind can be discharged at this time.

The influence of the upper-side upward discharge portion 31, the upper-portion lateral discharge portion 32, and the intermediate discharge portion 4 can be implemented in the following use mode based on the height of each discharge portion.

In the power mode, the clean air discharged from the upper-portion lateral discharge portion 32 can directly affect the head portion of the adjacent user. On the other hand, in the normal mode, the clean air discharged from the upper-portion lateral discharge portion 32 may directly affect the trunk portion of the adjacent user or the child.

In the power mode and the normal mode, the upper-side upward discharge portion 31 can blow clean air to the entire space of the room as the indirect wind.

In the power mode, the clean air discharged from the intermediate discharge portion 4 may directly affect the trunk portion of the adjacent user or the child.

Table 1 summarizes the use modes of the air purifying apparatus which can be implemented in the normal mode and the power mode by the upper-side upward discharge portion 31, the upper-portion lateral discharge portion 32, and the intermediate discharge portion 4.

**[TABLE 1]**

| | Upper-side upward discharge portion | Upper-portion lateral discharge portion | Inter mediate discharge portion | Example |
|---|---|---|---|---|
| Normal Mode | ○ | x | x | Entire Indoor Space Indirect Wind |
| Normal Mode | ○ | ○ | x | Entire Indoor Space Indirect Wind and Trunk/Child Direct Wind |
| Normal Mode | x | ○ | X | Trunk/Child Direct Wind |
| Power Mode | ○ | ○ | ○ | Entire Indoor Space Indirect Wind, Head Indirect Wind, and Trunk/Child Direct Wind |
| Power Mode | ○ | x | ○ | Entire Indoor Space Indirect Wind, and Trunk/Child Direct Wind |
| Power Mode | x | ○ | ○ | Head Indirect Wind, and Trunk/Child Direct Wind |
| Power Mode | x | x | ○ | Trunk/Child Direct Wind |

Referring to Table 1, a total of seven modes can be implemented when using the air purifying apparatus of the embodiment.

Referring to Table 1, the air cleaning function for the upper region in the normal mode can be performed in the intermediate region without being also excluded from the power mode. The specifications of the air purifying apparatus are sufficiently utilized so that the cleaning function can be performed together with the entire region instead of anyone optional region.

In addition, in the power mode, the upper region is a region which cannot be cleaned in the normal mode, and with respect to the corresponding region, in the power mode, since more outside air can be suctioned and purified, sufficient air purifying action can be performed. Therefore, the satisfaction of the user due to the mode switching can be improved.

The intermediate discharge portion 4 and the upper-portion lateral discharge portion 32 have similar heights but functions thereof may be different from each other. The intermediate discharge portion 4 can be provided with a wide hole at a wide discharge area as compared with the upper-portion lateral discharge portion 32 so that the discharge flow rate can be lowered. In this case, indirect wind can be implemented in the intermediate discharge portion 4. In this case, the intermediate discharge portion 4 can be used in a case of the old and the infirm who do not like the influence of the direct wind, and the upper-portion lateral discharge portion can be used in a case of the adult who wants direct wind.

Other examples not included in the scope of the present claims are presented.

It is explained that the door is not provided as the blocking membrane in the intermediate discharge portion 4, but are not limited to this, and a separate door capable of selectively blocking the intermediate discharge portion 4 may be provided. In this case, more variety of clean air discharge modes can be implemented.

In another case, in a case where the upper-side upward discharge portion and the upper-portion lateral discharge portion are not separated from each other but added, two modes, a power mode and a normal mode, may be implemented. Even in this case, the air cleaning function for the upper region in the normal mode can be performed in the intermediate region in the power mode. Therefore, It is the same that the specifications of the air purifying apparatus are utilized so that the cleaning function can be performed together with respect to the entire region instead of anyone optional region.

In the power mode, it is the same that more outside air can be suctioned and purified.

According to the present invention, since various modes can be implemented together in a single air purifying apparatus, user's satisfaction can be improved. Even in the implementation of the individual mode, it is possible to purify the indoor space quickly by making the most of the specifications provided in the air purifying apparatus. Due to the increased satisfaction of these products, industrial expectations are highly expected.

## Claims

1. An air purifying apparatus comprising:
a filter (12);
a fan (16) configured to suction outside air by applying negative pressure to the filter (12);
a first case (10) including a wall for receiving at least a portion of the fan (16) and the filter (12), the first case (10) extending in a vertical direction;
a second case (20) receiving at least a portion of the fan (16) and the filter (12), at least a portion of the second case (20) being capable of being overlapped with the wall of the first case (10), the second case (20) being capable of moving in the vertical direction;
a discharge portion (3) including:
an upper discharge portion (3) provided on an upper portion of the second case (20) so as to discharge air purified by the filter (12); and a suction portion (2) provided in the first case (10),
**characterized in that**:
the upper discharge portion (3) includes:
an upper-side upward discharge portion (31) provided on an upper-end front surface of the second case (20) and configured to discharge clean air upward, and
an upper-portion lateral discharge portion (32) provided on an upper side surface of the second case (20) and configured to discharge clean air laterally, wherein the upper-side upward discharge portion (31) and the upper-portion lateral discharge portion (32) are configured to be opened and closed separately from each other.

2. The air purifying apparatus of claim 1,
wherein the suction portion (2) includes:
a lower suction portion (28) through which outside air is suctioned through the wall of the first case (10); and
a base suction portion (27) provided at an interval between a base (13) spaced apart from the lower side of the first case (10) and the first case (10).

3. The air purifying apparatus of claim 1 or 2,
wherein the discharge portion (3) includes:
an intermediate discharge portion (4) provided at a lower portion of the second case (20).

4. The air purifying apparatus of claim 3,
wherein the intermediate discharge portion (4) can be overlapped with at least a portion of the suction portion (2).

5. The air purifying apparatus of any one of claims 1 to 4, further comprising:
an opening and closing structure which opens and closes at least one of the upper-side upward discharge portion (31) and the upper-side lateral discharge portions (32).

6. The air purifying apparatus of claim 5,
wherein the opening and closing structure for opening and closing the upper-side upward discharge portion (31) includes:
a cover (110, 140) horizontally disposed on an inner surface of the second case (20);
at least two variable blades (120) received in an inner space of the cover (110, 140); and
a drive plate (130) which allows the at least two variable blades (120) to rotate about a fixed shaft (121), wherein the rotation of the at least two variable blades (120) is guided by a rotation shaft (122).

7. The air purifying apparatus of any one of claims 5 or 6,
wherein the opening and closing structure for opening and closing the upper-side lateral discharge portion (32) includes:
a door (230) having a rack (261) inside;
a motor support portion (131) fixed to the second case (20); and
a motor (264) which is fixed to the motor support portion (131) and engages with the rack (261) to drive a pinion (263) capable of lifting and lowering the door (230) .

8. The air purifying apparatus of any one of claims 5 to 7,
wherein the opening and closing structure is placed in a non-hole region (41) through which no air passes to the upper portion of the second case (20).

9. The air purifying apparatus of any one of claims 1 to 8, further comprising:
at least two LM guides (11a, 11b) connecting the first case (10) and the second case (20) to each other.

10. The air purifying apparatus of claim 9,
wherein the LM guides (11a, 11b) include:
a first LM guide (11a) fixed to the first case (10), and
a second LM guide (11b) fixed to the second case (20), the second LM guide (11b) operating with respect to the first LM guide (11a) in the vertical direction.

11. The air purifying apparatus of claim 10,
wherein at least one of a filter frame (14) fixing the filter (12) and a fan housing (15) fixing the fan (16) are fixed to the first LM guide (11a).

12. The air purifying apparatus of claim 1,
wherein the first case (10) and the second case (20) are provided in a cylindrical shape.

13. The air purifying apparatus of claim 12,
wherein the first case (10) and the second case (20) have the same geometric center.

## Patentansprüche

1. Luftreinigungsvorrichtung, die aufweist:
einen Filter (12);
einen Ventilator (16), der konfiguriert ist, durch Ausüben von Unterdruck auf den Filter (12) Außenluft anzusaugen;
ein erstes Gehäuse (10), das eine Wand zur Aufnahme mindestens eines Abschnitts des Ventilators (16) und des Filters (12) aufweist, wobei sich das erste Gehäuse (10) in vertikaler Richtung erstreckt;
ein zweites Gehäuse (20), das mindestens einen Abschnitt des Ventilators (16) und des Filters (12) aufnimmt, wobei sich mindestens ein Teil des zweiten Gehäuses (20) mit der Wand des ersten Gehäuses (10) überlappen kann und das zweite Gehäuse (20) sich in vertikaler Richtung bewegen kann;
einen Auslassabschnitt (3), der aufweist:
einen oberen Auslassabschnitt (3), der an einem oberen Abschnitt des zweiten Gehäuses (20) vorgesehen ist, um durch den Filter (12) gereinigte Luft auszulassen;
und einen Ansaugabschnitt (2), der im ersten Gehäuse (10) vorgesehen ist,
**dadurch gekennzeichnet, dass**:
der obere Auslassabschnitt (3) aufweist:
einen oberen, nach oben gerichteten Auslassabschnitt (31), der an einer oberen Stirnfläche des zweiten Gehäuses (20) vorgesehen ist und konfiguriert ist, saubere Luft nach oben auszustoßen, und
einen oberen seitlichen Auslassabschnitt (32), der an einer oberen Seitenfläche des zweiten Gehäuses (20) vorgesehen und konfiguriert ist, saubere Luft seitlich auszustoßen, wobei der obere, nach oben gerichtete Auslassabschnitt (31) und der obere seitliche Auslassabschnitt (32) konfiguriert sind, getrennt voneinander geöffnet und geschlossen zu werden.

2. Luftreinigungsvorrichtung nach Anspruch 1, wobei der Ansaugabschnitt (2) umfasst:
einen unteren Ansaugabschnitt (28), durch den Außenluft durch die Wand des ersten Gehäuses (10) angesaugt wird; und
einen unteren Ansaugabschnitt (27), der in einem Abstand zwischen einer Basis (13), die von der Unterseite des ersten Gehäuses (10) beabstandet ist, und dem ersten Gehäuse (10) vorgesehen ist.

3. Luftreinigungsvorrichtung nach Anspruch 1 oder 2, wobei der Auslassabschnitt (3) umfasst:
einen Zwischenauslassabschnitt (4), der an einem unteren Abschnitt des zweiten Gehäuses (20) vorgesehen ist.

4. Luftreinigungsvorrichtung nach Anspruch 3,
wobei der Zwischenauslassabschnitt (4) sich mit mindestens einem Teil des Ansaugabschnitts (2) überlappen kann.

5. Luftreinigungsvorrichtung nach einem der Ansprüche 1 bis 4, die ferner aufweist:
eine Öffnungs- und Schließstruktur, die mindestens einen, den oberen nach oben gerichteten Auslassabschnitt (31) und/oder den oberen seitlichen Auslassabschnitt (32) öffnet und schließt.

6. Luftreinigungsvorrichtung nach Anspruch 5,
wobei die Öffnungs- und Schließstruktur zum Öffnen und Schließen des oberen, nach oben gerichteten Auslassabschnitts (31) umfasst:
eine Abdeckung (110, 140), die horizontal an einer Innenfläche des zweiten Gehäuses (20) angeordnet ist;
mindestens zwei variable Flügel (120), die in einem Innenraum der Abdeckung (110, 140) aufgenommen sind; und
eine Antriebsplatte (130), die es den mindestens zwei variablen Flügeln (120) ermöglicht, sich um eine feste Welle (121) zu drehen, wobei die Drehung der mindestens zwei variablen Flügel (120) durch eine Drehwelle (122) geführt wird.

7. Luftreinigungsvorrichtung nach einem der Ansprüche 5 oder 6,
wobei die Öffnungs- und Schließstruktur zum Öffnen und Schließen des oberen seitlichen Auslassabschnitts (32) umfasst:
eine Tür (230) mit einer Zahnstange (261) darin;
einen Motorträgerabschnitt (131), der am zweiten Gehäuse (20) befestigt ist; und
einen Motor (264), der am Motorträgerabschnitt (131) befestigt ist und mit der Zahnstange (261) in Eingriff steht, um ein Ritzel (263) anzutreiben, das die Tür (230) anheben und absenken kann.

8. Luftreinigungsvorrichtung nach einem der Ansprüche 5 bis 7,
wobei die Öffnungs- und Schließstruktur in einem lochfreien Bereich (41) angeordnet ist, durch den keine Luft in den oberen Teil des zweiten Gehäuses (20) gelangt.

9. Luftreinigungsvorrichtung nach einem der Ansprüche 1 bis 8, die ferner aufweist:
mindestens zwei Linearführungen (11a, 11b), die das erste Gehäuse (10) und das zweite Gehäuse (20) miteinander verbinden.

10. Luftreinigungsvorrichtung nach Anspruch 9, wobei die Linearführungen (11a, 11b) umfassen:
eine erste Linearführung (11a), die am ersten Gehäuse (10) befestigt ist, und
eine zweite Linearführung (11b), die am zweiten Gehäuse (20) befestigt ist, wobei die zweite Linearführung (11b) in Bezug auf die erste Linearführung (11a) in der vertikalen Richtung arbeitet.

11. Luftreinigungsvorrichtung nach Anspruch 10, wobei ein Filterrahmen (14), der den Filter (12) befestigt, und/oder ein Ventilatorgehäuse (15), das den Ventilator (16) befestigt, an der ersten Linearführung (11a) befestigt ist/sind.

12. Luftreinigungsvorrichtung nach Anspruch 1, wobei das erste Gehäuse (10) und das zweite Gehäuse (20) in einer zylindrischen Form vorgesehen sind.

13. Luftreinigungsvorrichtung nach Anspruch 12, wobei das erste Gehäuse (10) und das zweite Gehäuse (20) denselben geometrischen Mittelpunkt haben.

## Revendications

1. Appareil de purification d'air, comprenant :
un filtre (12) ;
un ventilateur (16) prévu pour aspirer l'air extérieur en appliquant une pression négative sur le filtre (12) ;
un premier boîtier (10) comprenant une paroi destinée à recevoir au moins une partie du ventilateur (16) et du filtre (12), ledit premier boîtier (10) s'étendant dans la direction verticale ;
un deuxième boîtier (20) recevant au moins une partie du ventilateur (16) et du filtre (12), au moins une partie dudit deuxième boîtier (20) pouvant se superposer à la paroi du premier boîtier (10), ledit deuxième boîtier (20) pouvant se déplacer dans la direction verticale ;
une partie de refoulement (3) comprenant :
une partie de refoulement supérieure (3) prévue sur une partie supérieure du deuxième boîtier (20) de manière à refouler l'air purifié par le filtre (12) ; et une partie d'aspiration (2) prévue dans le premier boîtier (10),
**caractérisé en ce que** :
la partie de refoulement supérieure (3) comprend :
une partie de refoulement supérieure vers le haut (31) située sur la surface avant de l'extrémité supérieure du deuxième boîtier (20) et prévue pour refouler l'air purifié vers le haut, et
une partie de refoulement supérieure latérale (32) située sur une surface latérale supérieure du deuxième boîtier (20) et prévue pour refouler latéralement l'air purifié, la partie de refoulement supérieure vers le haut (31) et la partie de refoulement supérieure latérale (32) étant prévues pour être ouvertes et fermées séparément l'une de l'autre.

2. Appareil de purification d'air selon la revendication 1,
où la partie d'aspiration (2) comprend :
une partie d'aspiration inférieure (28) par laquelle l'air extérieur est aspiré à travers la paroi du premier boîtier (10) ; et
une partie d'aspiration de base (27) située à intervalle entre une base (13) espacée du côté inférieur du premier boîtier (10) et le premier boîtier (10).

3. Appareil de purification d'air selon la revendication 1 ou la revendication 2,
où la partie de refoulement (3) comprend :
une partie de refoulement intermédiaire (4) située dans une partie inférieure du deuxième boîtier (20).

4. Appareil de purification d'air selon la revendication 3,
où la partie de refoulement intermédiaire (4) peut chevaucher au moins une section de la partie d'aspiration (2).

5. Appareil de purification d'air selon l'une des revendications 1 à 4, comprenant en outre :
une structure d'ouverture et de fermeture ouvrant et fermant la partie de refoulement supérieure vers le haut (31) et/ou les parties de refoulement supérieures latérales (32).

6. Appareil de purification d'air selon la revendication 5,
où la structure d'ouverture et de fermeture ouvrant et fermant la partie de refoulement supérieure vers le haut (31) comprend :
un couvercle (110, 140) disposé horizontalement sur une surface intérieure du deuxième boîtier (20) ;
au moins deux pales variables (120) logées dans un espace intérieur du couvercle (110, 140) ; et
une plaque d'entraînement (130) permettant auxdites au moins deux lames variables (120) de tourner autour d'un arbre fixe (121), la rotation desdites au moins deux lames variables (120) étant guidée par un arbre rotatif (122).

7. Appareil de purification d'air selon la revendication 5 ou la revendication 6,
où la structure d'ouverture et de fermeture ouvrant et fermant la partie de refoulement supérieure latérale (32) comprend :
une porte (230) pourvue d'une crémaillère (261) sur sa face intérieure ;
une partie de support de moteur (131) fixée au deuxième boîtier (20) ; et
un moteur (264) fixé à la partie de support de moteur (131) et en prise avec la crémaillère (261) pour entraîner un pignon (263) apte à faire monter et descendre la porte (230).

8. Appareil de purification d'air selon l'une des revendications 5 à 7,
où la structure d'ouverture et de fermeture est disposée dans une zone non perforée (41) à travers laquelle l'air ne passe pas dans la partie supérieure du deuxième boîtier (20).

9. Appareil de purification d'air selon l'une des revendications 1 à 8, comprenant en outre :
au moins deux guides LM (11a, 11b) reliant le premier boîtier (10) et le deuxième boîtier (20) l'un à l'autre.

10. Appareil de purification d'air selon la revendication 9, où les guides LM (11a, 11b) comprennent :
un premier guide LM (11a) fixé au premier boîtier (10), et
un deuxième guide LM (11b) fixé au deuxième boîtier (20), ledit deuxième guide LM (11b) étant actionné dans la direction verticale par rapport au premier guide LM (11a).

11. Appareil de purification d'air selon la revendication 10,
où le cadre de filtre (14) fixant le filtre (12) et/ou un boîtier de ventilateur (15) fixant le ventilateur (16) sont fixés au premier guide LM (11a).

12. Appareil de purification d'air selon la revendication 1,
où le premier boîtier (10) et le deuxième boîtier (20) sont prévus avec une forme cylindrique.

13. Appareil de purification d'air selon la revendication 12,
où le premier boîtier (10) et le deuxième boîtier (20) ont le même centre géométrique.
